# EUROPEAN PATENT SPECIFICATION

(11) **EP 2 511 433 B1**
(45) Date of publication and mention of the grant of the patent: **22.05.2019**
(21) Application number: 12394003.3
(22) Date of filing: 11.04.2012
(51) Int. Cl.: E04D 13/04, E03B 3/02, E04D 13/064

(54) **Rain water harvesting by means of linear elevated tanks**
Regenwassersammlung mittels linear erhobenen Behälter
Collection d'eau de pluie au moyen de réservoirs linéairs surélevés

(30) Priority: 13.04.2011 IE 20110181
(43) Date of publication of application: 17.10.2012
(73) Proprietor: Glackin, Desmond, Malin Head Donegal (IE)
(72) Inventor: Glackin, Desmond, Malin Head Donegal (IE)

(56) References cited:
- AU-A1- 2003 203 990
- AU-A1- 2008 202 915
- AU-A1- 2009 203 102
- DE-U1- 8 521 690
- US-A- 5 873 383

## Description

### Field of Invention

The Present invention involves a rainwater harvesting system using the area commonly known as the projection or gutter line of a building for the purpose of harvesting water. The invention also includes a solution to maintaining this water for later use in a manner that limits the impact of low ambient temperatures. The invention also provides a solution to maintaining the water in a clean state and to retrieving the water in an effective manner. Water leaves the roofing material and is collected in semi-circular or rectangle open top structure which is called a gutter. The invention describes how the gutter is connected to plumbing systems in the building to enable it the water to benefit from convected air and in addition to enable the water to be used as needed.

### Background to the Invention

In alternative systems;
a) The gutter stops the water from flowing onto the ground and or blown onto the wall of the building causing damage to the structure. The water from this gutter is brought to a pipe which is vertical to the gutter which directs the water to a desired location surface water drain or a water harvesting system. To bring this harvested rain water to use in the building it has to be pumped mechanically or manually. The holding vessels are positioned either above or below ground level. Positioning below ground level means that excavation has to occur.
b) In some cases this is not possible or desirable and this method can lead to contamination. When the rainwater is stored in vessels above ground this may compromise the visual appearance of the property and is also prone to frost and the effects of Ultra Violet light. When water is stored in large volumes if not used regularly it can become a stagnant source thus meaning the water will have to be treated for e. coli etc.
c) When water is stored in vessels on an elevated site to give gravity flow the support and makeup of the vessel or water butt / tank have to be of a design that will allow for volume of water needed and type of structure to carry said volume and weight which may not be achievable giving the location to which the harvested water has to service.
d) In other systems problems arise from water brought to a property by means of a pipe (either plastic or metal) from mains, harvested or any other source it is prone to weather problems, the main problem being frost leading to hardship to those in need of our most precious resource. In the event of severe weather this may be the case.

In contrast to the above, the advantages of this invention are that we store the harvested water in an area that alleviates a lot of the problems as explained in the previous section. Harvesting water at this location gives you the benefits of gravity flow to any site sought within the building also the means to control quality of water to be harvested. This is due to the distance of the collecting process from the storage area. It has the unique feature of being able to control the temperature within the collecting and storage process. In the event of servicing and cleaning, this can be undertaking externally. If and when there is a problem with the system it is outside the property, therefore causing no damage internally.

The system can be fitted to a new build taking into account building regulations and design; a large volume can be stored without compromising same. Due to the location of the water that has been harvested when in-situ it would act as a fire check to that area of the building. The system can be fitted to buildings that do not have an overhang or projection in a manner that that would not in any way compromise the visual aspect by taking into account the type of materials to be used in same.

By harvesting rainwater in the manner proposed the weight to volume ration is taken into account, storing liquid in a linear vessel or vessels over a desired length takes into account the tank specification and support for same. In the event of a problem arising the tank and liquid disperses in a manner that would be of no danger to anybody or object in that region.

The system can be cleaned or extended by opening a cleaning point at either end of the tanks so that maintenance can be carried out easily.

(The thought for this design is that it will work independently and in harmony with other systems within/or outside the property, supply water that will be in constant use to service toilets or items that may be damaged by water from other sources. In the event of water being turned off due to maintenance of weather conditions it will supply water for personal hygiene and supply for toilets. There would be no cross contamination with other systems.)

Where the joint to other systems is made is at a level and a means that when one system is in use the other is closed off (either manually or motorised).

The problem with having our buildings so well insulated is that the air around our storage tanks and pipes in most cases are not properly protected from the effects of cold in the attic. This can cause untold damage to a property due to the cold air within the attic, snow and ice build up on the outside of the roofing material will cause weight on the structure.

A method for alleviating the effect of the above is by allowing hot air from the main building gain access to the attic area or by placing a heat source in situ. By not being able to control the amount of heat to the desired location means that you are releasing large amounts of energy in excess of what is required to obtain desired effect.

AU 2009 203 102 A1 discloses the features of the preamble of claim 1.

### Summary of the invention

According to the invention there is provided a rainwater harvesting system with the features of claim 1. This allows the benefit of deciding the volume of water to be harvested and required to complement our needs (size and length of tanks). The tanks fixed on the outside of the property are easy to maintain, but the benefits are as if it was fitted internally (insulated on exposed sides). The water stored is always at a level to give gravity flow. The water is less likely to damage appliances with elements. When harvested rain water is in continuous use there is no need for treatment (only if desired). This water can be brought to drinking quality and also works in harmony with other systems. The advantage of the invention is that there is provided, a tank or tanks in a location that does not impose on the visual appearance or design of a building and gives large units of storage capacity taking into account weight to volume ratio that does not equate to a health and safety issue.

In one embodiment the external leaf of the wall is used to absorb some of the weight with the remainder being catered for by hanging supports from the roof and the tank being fixed to the wall through its internal face under the area where the roof intersects with the wall. This occurs mostly in new builds.

In one embodiment there is a support bracket fitted to the outside of a building horizontal and at right angles to the wall that act as a seat for the tank to rest on. This can act as a replacement for material or as a fixing for materials to create what is known as a soffit, this can be either at the previous or lower level than the original. The remainder of the supports can be attached or suspended from the roofing materials.

In one embodiment the system is fitted to a design that previously did not have an overhang of the roofing materials to create a projection. The supports are again fixed to the external wall with a further support from the base and around the system in a wrapping fashion. A material is then placed on the top outer face of the tanks on a longitude fashion from one gable end to the other, this allows for fixing of roofing material to colour code to original and fitting of a facia and soffit plus water channel.

In one embodiment the tanks are supported by creating shelves using the structural steel of the building that allow for layers of storage to be under taken, this to occur free from weather effects as was the case with previous embodiment. Insulation to desired levels has to take place.

In one embodiment the means of allowing the liquid transfers from the roof into the gutter to the holding vessels by means of a horizontal pipe system, this allow for filtering to take place. These feeders are positioned in a raised uniform sequence from the base of the gutter.

In one embodiment there is a liner placed into the gutter to give a clean new means by which harvesting rainwater can take place to a desired filtered level.

In one embodiment there is a stop feature created vertical from the base of the gutter to a height that will act as a silt chamber and stop the water from passing through debris in the gutter system but diverts to the points of least resistance i.e. the filtering gateways to the tanks, and when the system has reached capacity the water overflows the stop and on through the gutter system as it did before to designated dispersing points (downpipes).

In one embodiment there is a service pipe to bring the filtered water into use within or outside a property. This can be achieved in a number of ways:- by cutting a chase channel to receive the insulated pipe on the external wall, this means a minimum of reinstatement has to be undertaken . The other it through the wall to the internal or brought down the cavity feature in the external wall all, these take the shorter route to an appliance or facility and are insulated to the desired level.

In one embodiment there is a duct brought from the internal of the building to the location of the tank. This transfers warm air to the point where it can act as a protection mechanism for weather elements. The horizontal pipe or duct can by its location allow for a controlled release of high temperature air to thaw snow and ice to replenish the system an also relieve weigh accumulation on the roof structure.

### Brief Description of the Drawings

The invention will be more clearly understood from the following description of an embodiment thereof, given by way of example only, with reference to the accompanying drawings, in which;
Figure 1a is a side view of the tank location and supports according to the invention in a new build.
Figure 1b is a side view of the tank location and support for the system according to the invention. In a retro fit format 1a + 1b show the collection method, the service pipe and the airflow duct to prevent weather effects.
Figure 2a is a side view of the storage and collection method of a building without an overhang or projection. In this view the service pipe is embedded into the outer wall of the cavity system according to the invention.
Figure 2b is a view through the gutter to show the feeders from the back face of the gutter nearest to the storage tank showing the small upright feature on the base of the channel to create the silt chamber according to the invention.
Figure 3a & 3b show a side and end view of the tank design with the inverted connection. The tapered design to obtain stack ability according to the invention.
Figure 4a & 4b show end view and frontal view of the liner that can be fitted to existing gutters or water channels. To create the collection method including the silt trap feature which gives a clean means of carrying out the invention process without having to remove or clean the gutter.
Figure 5a & 5b show a front elevation of the tanks in a stacking manner. Where the design of the building is used for this purpose and large volumes can be achieved and also helping in the oxygenation process with the water moving from one level to a lower level both in the filling and usage movement according to the invention.
Figure 6a & 6b show the end side and top view of the tank design as shown in 3a & 3b but in this design the connection means are a continuation of the base that transfers into a projected fitting arrangement which allows for a greater degree of self-clean due to non-raised areas.
Figure 7a show a view through the gutter that show the filter in place in the feeder and again the silt chamber being created before reaching the downpipe according to the invention.

### Detailed description of Drawings

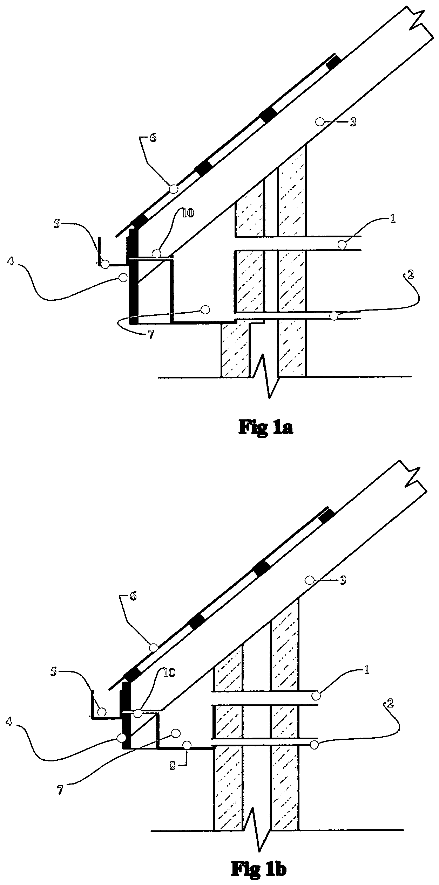

Referring now to the drawing figure 1A shows the location of the tank no7 in the new build. In this case the bulk of the weight is supported on the outer leaf of the external wall. Other supports are by means of hangers from the rafters (no3) these may be of metal or PVC material, and will be of a specification that will take into account the weight to volume ratio and tank design.

No 1 shows a duct pipe or vent pipe to supply air from internal of building to desired location of tank no7, these can be circular or rectangle in PVC to a size 100m or in a case for further protection in a linear fashion in a non-intrusive manner around the building. This can also be achieved by using existing room vents.

The service pipe no2 which brings water to the desired location, e.g. toilets, electric shower, or other kitchen appliances or to external taps for other purposes. This pipe is to be of good quality material in order to deliver the water, in either PVC or material of a flexible nature min size 25mm.

The timber rafters or trusses no3 carry over the wall line of the building to form the projection or overhang.

The facia is formed by cutting the end of the rafter No 3 vertically, mounting a timber or metal NO4 230x 025 fixed by screws or nailed to the cut end. This gives you a location to fit the gutter (No 5) to receive water from roofing material no6

Figure 1b shows the same process as figure 1a but with the difference being that this is an existing building. The tank in this case is supported by means of anchor bolts fitted through a carrier channel at the bottom of the tank No 8. This can be separate or included in tank design. Again as described in figure 1a these can be of a material that conform to the specifications required.

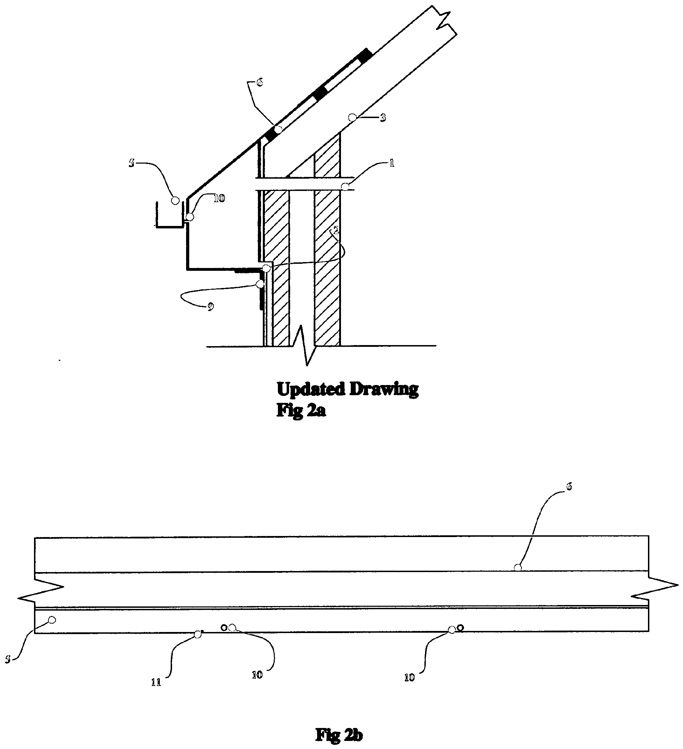

Figure 2 a shows tank fitted to buildings without a projection or overhang. This may be found on commercial, agricultural or older buildings. As in figure 1a and 1b the same process takes place. The difference is that a projection is being formed. The top of the tank is fitted under and to the roofing materials (No 6). It sends the water to the collection point gutter (No 5) The means by which this tank is secured is by L brackets (No 9) fixed to the wall with anchor bolts and straps around the tank fitted to the wall above with anchors and screws.

It has been demonstrated how the tanks which are subject of this invention may be fitted in different situations
1a in new builds
1b in existing buildings
2a in buildings without projections

Now to demonstrate how we allow the water from the roof via the gutter gain entry to our tanks. The water is allowed entry to the tank by means of round 25mm (or other sizes to suit situations) connecting pipes fig1a 1b 2a 2b No10 which run from the back of the gutter as shown on figure 2 b. These are placed at 2m intervals on an ascending design to ensure continuous feed to tanks and so the first wash from the roof containing debris and silt does not enter the tank. Every 4 m a small silt chamber no 11 is formed in the gutter no 5. These are again in ascending order with connecting pipes starting at 5mm from base of gutter to 10mm towards the exit point of the gutter.

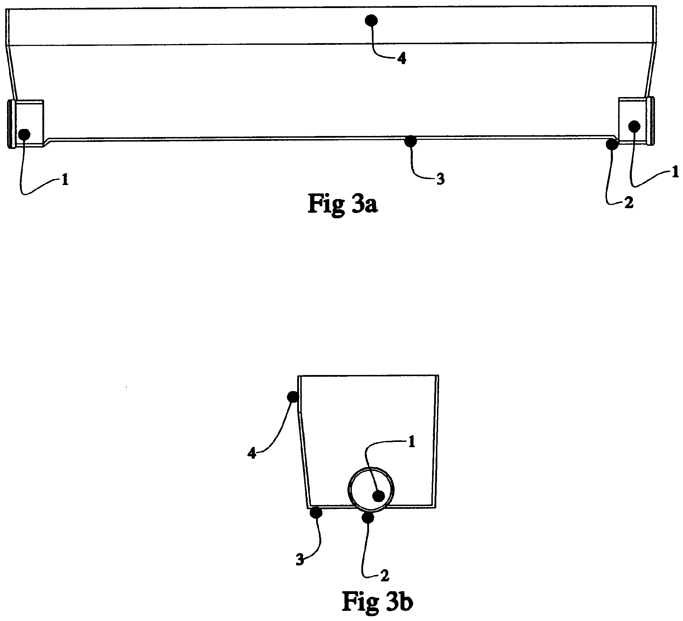

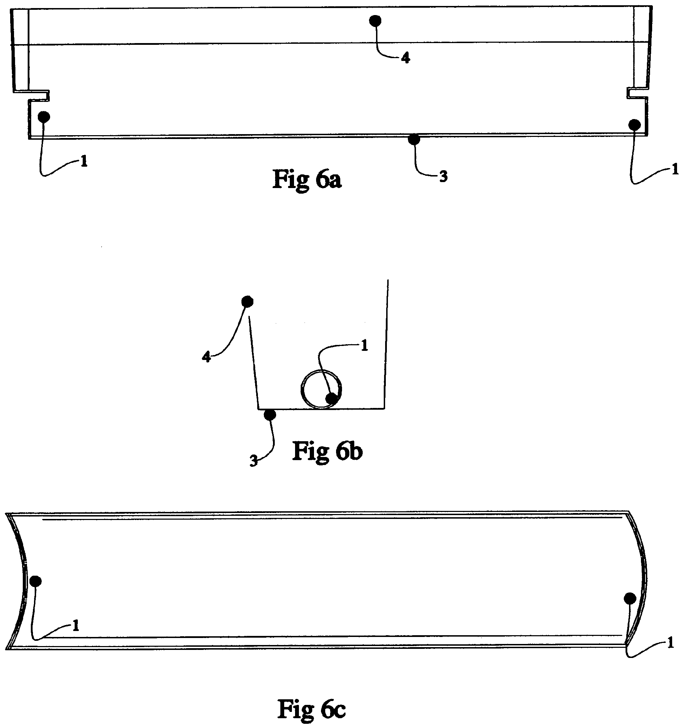

Figure 3a shows the storing vessel or tank design that allows for self-cleaning of the system. The means of connection is by a circular pipe which is received by a connection point at the base of the tank, (either inverted or projected.) fig 3a fig6a No 1. The connection is designed so that the bottom of the connection pipe No 2 is level with the base of the tank, thus allowing for cleaning and no sediment trap to occur. The base of the tank No 3 has no ribbing or raised areas that would cause traps for debris or sediment to gather. The said tanks are designed in a tapered format to allow for easy stack-ability, for storage and transport, the tank has a vertical face 100mm from top fig 3b no 4

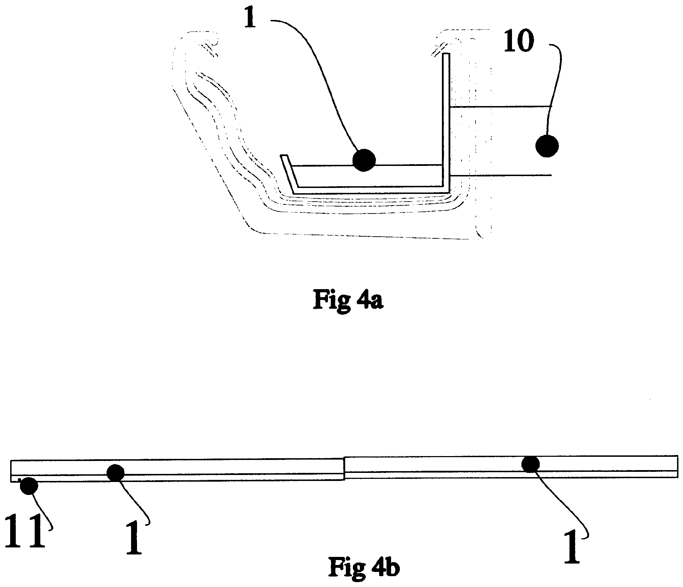

The collection method can also be achieved by a liner designed so that it can be fitted to new or in-situ water channels/gutters to create a clean and secure way to allow the water gain access to the storage tanks. Figure 4a no 10 the liner no1 is placed into the gutter Figure 1a no 5. By fitting this liner gutters that are in-situ do not have to be removed. The liner is made up of any material sought and is manufactured to a design so that it can be easily fitted to any dimensions in lengths of 2 m, providing a silt trap every 4m fig 4 b no 11.

The advantage of having the feeders in this location is that they are easy to service and it allows the water to be filtered to a desired level. It also allows the tanks to be fitted higher and subsequently more storage without taking from the design of the building as shown on figure 1a. The air flow can be directed to this area fig1a. No 1. This has a twofold effect. It keeps the tank free of frost and thaws any show or ice lying on top of the roofing material. One can see the effect of this process by looking at buildings that do not have the specified insulation in their roof space. The area to which the hot air is directed is the only part of the building that is not insulated. It is what is known as a "cold spot" due to the airflow that is needed from vents to parts of the roof above the insulation, these are what are called soffit vents and are not compromised.

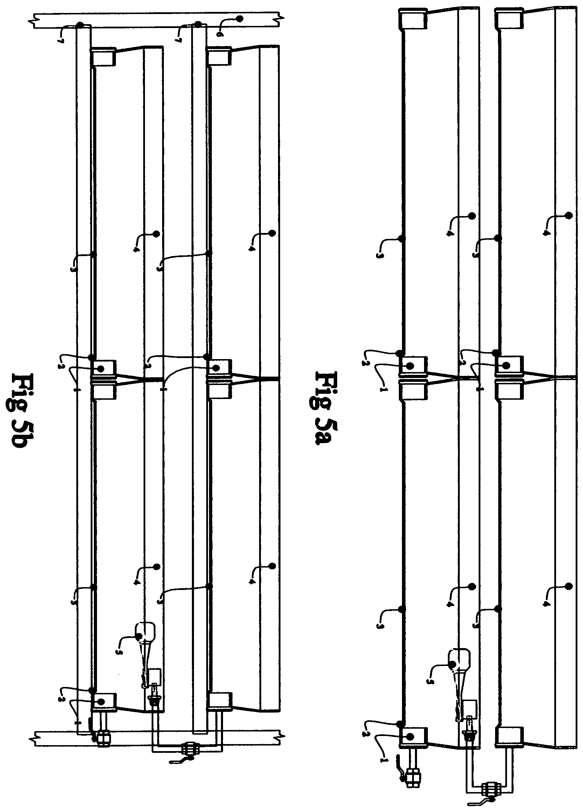

The water is moved through the system in the collection process and with usage larger volumes can be stored by means of a stacking format. The water is harvested as shown fig2b no10 to first tank fig1a no7 this is fed to a tank or tanks at a lower level on elevation than the collection tank. At each level of tanks there is a ball valve fig 5a No 5 that will stop the water when the system at that level has reached capacity from accepting more. This allows the system to fill in a stacking manner. What this achieves is movement of the water when being stored and by usage, the water flows from one level to another, thus obtaining oxygenation. This is shown in drawing fig5a and allows for the water to be stored in this manner at any location within a building or any area that is sought. Large volumes of water stored by this method gives the consumer great flexibility to cater for their needs without excavation or construction of large support unit to be undertaken. This system on the other hand uses the existing structure of the building for the stacking method to take place. In agricultural buildings there are steel uprights to support the roof fig 5b No 6, and a wall on the exterior to a height that take into account airflow needed to prevent livestock from getting ill due to lack of same. This too can be used for the support of tank or tanks. The support for each level of tanks is achieved by cutting a small slit in the steel upright. Fig 5b No 7 at the desired levels to receive steel to act as shelves for the tanks to rest on. This therefor does not weaken the structure and is flexible for the volumes needed. This method can be creating by constructing a frame. (Two uprights with horizontal connectors at the desired heights to give gravity flow) A big problem in most areas is leaves getting into the gutters and causing other water harvesting systems to clog up. Not so with this system as the water is not fed by a vertical pipe (downpipe). The feeders are horizontal at different levels. If in the filling process leaves or other debris lodge at the first feeder the filling liquid is catered for by the next feeder thus relieving the suction from the first and letting the debris carry on right through the gutter to be removed as before in the cleaning process. This system also allows for small whirl pools to help in the oxygenation process as well as the movement of the water through the system. The feeder also works in reverse. The benefits of the tanks being located in the projection or circumference is that any problems that may arise are outside the building therefore creating no damage internally, but with the performance of a tank located internally (in attic). On other buildings in other situations the tanks can be located on the inside of the gutter line, or inside external walls thus reducing the need for heavy insulation of tanks.

With the system the collection method becomes the overflow when the system has reached capacity and also by fitting a diverter from the end tank to bring the filtered water to another location this will also act as an overflow system.

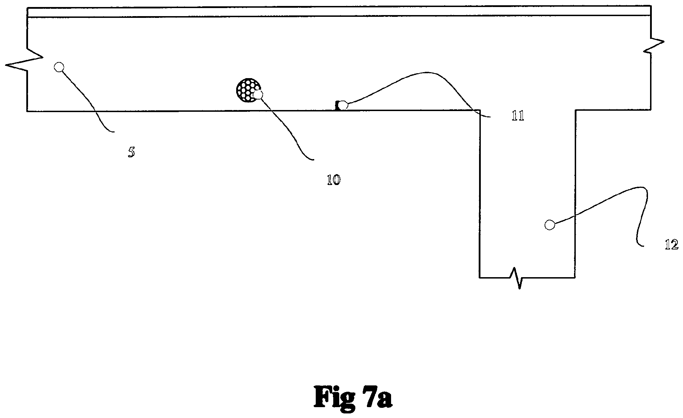

Figure 6a shows the base of the tank No 3 carrying through to either end of the tanks, it is then incorporated into a projected fitting point No 1. There is a small recess at the top to receive a coupling by which the tank can be fitted end to end on a linear format as can also occur with figure 3a. The difference in this case is that we have a male to female design to give more storage when fitted. These again allow for stack ability for storage and transportation for the fitting of collection process No 4. This is again shown in Fig 6b with Fig 6c showing the male and female design. Figure 7 a is a view through the gutter no 5 showing the feeder No 10 with the filter in place. This clearly shows the feeder No 10 at a raised distance from the base of the gutter No 5 with a stop feature No 11 at a slightly higher level. This allows for the debris or first wash from the roofing material to let (due the density of the material) sink to the base of the gutter and the cleaner water rise to the level of the feeder No 10. When the system has reached capacity the water flows over the silt stop No 11 and out the downpipe No 12 as it had before the system was fitted.

While the invention has been described herein with reference to several preferred embodiments, these embodiments have been presented by way of example only, and not to limit the scope of the invention. Additional embodiments thereof will be obvious to those skilled in the art having the benefit of this detailed description, especially to meet specific requirements or conditions. Further modifications are also possible in alternative embodiments without departing from the inventive concept, as defined in the appended claims.

## Claims

1. A rainwater harvesting system comprising a tank [7]designed to allow for the addition of tanks [7] of a linear design and a means of connection , the tanks being positionable in an area of a building known as the projection wherein water from the roof enters a channel called a gutter [5] to be carried to dispersing points away from the building by means of a pipe which runs vertical to the gutter, known as a downpipe wherein rainwater before reaching said downpipe is diverted to the tanks [7] by feeders[10] positioned on an internal upright feature of the gutter [5] which internal upright feature is vertical and parallel to the wall of the building ,which feeders [10] give watertight bridges to the tanks[7] said feeders[10]being of circular or of any other desired design and starting at a level that reduces the risk of debris from entering the tanks[7] with a silt chamber created at specified points, wherein the tanks[7] are of a design that allows for self-cleaning of the system, the means of connection being a circular pipe, wherein tanks[7] are placed at the same level of elevation and are connected by the circular pipe, which is received by a connection point at the base of the tanks [7] wherein the circular pipe is designed so that the bottom of the circular pipe is in level with the base of the tanks thus allowing for no sediment traps to occur when two another tank[7]or a number of consecutive tanks[7] are connected at the same level wherein the base of the tanks has no ribbing or raised areas so that this process can be continuous throughout the system, **characterised in that** said tanks[7] are designed on a tapered format to allow for easy stack ability for storage and transport but additionally encompasses features that allow for insulation to a desired level to be obtained and the fitting of a water collection device, and **in that** water is then being fed to a further tank [7] or tanks positioned at a lower level of elevation than said connected tanks[7] and **in that** at each level of tanks there is a ball valve[18] or a restriction mechanism that will stop the liquid from overflowing when the tank or tanks at that level has or have reached capacity from accepting more water which allows the system to fill in a stacking manner achieving movement by usage as the water flows from one level to another thus obtaining oxygenation which allows for the water to be stored in large volumes at any location within a building that will facilitate this method and obtain the desired quantity.

2. The rainwater harvesting system of claim 1 where a liner is fitted to new and in-situ water gutters so that by fitting this liner gutters do not have to be removed wherein the liner is made from any material required to obtain maximum efficiency and can be easily fitted to any dimensions in lengths of 2m providing a silt trap every 4m or to an alternative specification in certain situations.

3. The rainwater harvesting system of any preceding claim where the storage tanks are supported either by a channel bracket underneath them which is fixed to a wall or a structure by anchor bolts or an alternative securing means or suspended from the roofing truss with fixings including materials that give adequate support to take into account weight to volume ratio and allows for visual co-ordination to be achieved.

4. The rainwater harvesting system of any preceding claims where the structure of the building is used for the mounting in stacking manner of the tanks where the design of the buildings consists of a number of steel uprights to support the roof and a wall on the exterior to a height that takes into account airflow needed in most cases to prevent livestock getting ill due to lack of same, this wall can be used for the support of the tanks wherein the main supports encompassed in the building are used to facilitate the storing format by creating supports from one upright to the other to act as shelves for the tanks to rest on so that this does not weaken the structure and is flexible for volumes needed and a frame can also be created consisting of 2 uprights with horizontal shelves that will create aforementioned effect.

5. The rainwater harvesting system of any preceding claims wherein when debris lodge at the first feeder thus hindering the water to gain access to the tanks then the filling process is catered by the next feeder thus letting the debris carry on right through the gutter to be removed with general maintenance and cleaning, wherein this system also allows for small whirlpools to help with the oxygenation in conjunction with the movement of the water through the system wherein these feeders also work in reverse, the benefits of the tanks being located in the projection of circumference being that any problems that may arise are outside the building therefore creating no damage to a property.

6. The rainwater harvesting system of any preceding claims where additional tanks are located in the internal of a building or buildings thus reducing the need from creating a projection to the said building and allowing for easy insulation to the desired level to take place, the feeders in this case being increased in length.

7. The rainwater harvesting system of any preceding claims where the location and fitting of the tanks in the circumference gives great protection and safeguards to a property, fire to name but one and due to the fact that there is water at every location that it has to service wherein this then reduces the need for large volumes of pipework to bring the water into use within or outside the building for general plumbing systems outside the format of the above stated rainwater harvesting system.

8. A rainwater harvesting system of any preceding claim where filters are used so water is brought to a quality that is free from any sediment and bacteria or chemicals making it fit for human consumption, either from a fixed structure or any materials or designed mechanisms that will act as a catchment for harvesting of rainwater to be undertaken and the previously stated tank design being fitted on a elevated, sunken or concealed area in a feature in or around a property or structure for use in other industrial applications.

## Patentansprüche

1. Eine Regenwassernutzungsanlage mit mindestens ein Tank [7] entworfen um dem Zusatz von Tanks (7) in einer linearen Bauweise und einer Verbindungsvorrichtung, wobei die Tanks im Bereich eines Gebäudes bzw. in einem Vorsprung positionierbar sind, von dem Wasser vom Dach in einen Kanal bzw. in eine Rinne eintritt, [5] sodass Wasser mithilfe eines Rohrs bzw. Fallrohrs, das senkrecht zur Rinne verläuft, vom Gebäude weg geleitet wird; dabei wird Regenwasser an die Tanks umgeleitet, bevor es dieses Fallrohr erreicht, [7] und zwar durch Zulaufleitungen, [10] die an einer internen senkrechten Vorrichtung der Rinne angebracht sind, [5] diese interne senkrechte Vorrichtung verläuft senkrecht und parallel zur Mauer des Gebäudes, deren Zulaufleitungen [10] wasserdichte Brückenabdichtungen für die Tanks sind; [7] besagte Zulaufleitungen [10] in kreisförmiger Bauweise oder einer anderen gewünschten Bauweise beginnen bei einer Höhe, die das Risiko des Eindringens von Schmutz in die Tanks verringert, [7] und zwar mit einem Schlammfang an bestimmten Punkten, wobei die Tanks [7] so konzipiert sind, dass eine Selbstreinigung des Systems möglich ist; die Verbindungsvorrichtungen sind ein kreisförmiges Rohr, worin Tanks auf gleicher Höhe angebracht und über das kreisförmige Rohr verbunden sind, das von einem Verbindungspunkt an der Unterseite der Tanks aufgenommen wird; [7] das kreisförmige Rohr ist so konzipiert, dass die Unterseite des kreisförmigen Rohrs auf gleicher Höhe wie die Unterseite der Tanks liegt, damit keine Sedimentfallen auftreten, wenn zwei aufeinanderfolgende Tanks auf derselben Höhe verbunden sind, wobei die Unterseite der Tanks keine Verrippung oder erhöhten Flächen aufweist, sodass dieser Prozess kontinuierlich über das gesamte System hinweg verlaufen kann, **gekennzeichnet dadurch, dass** besagte Tanks [7] in einer konischen Bauweise konzipiert sind, um eine einfache Stapelfähigkeit für Lagerung und Transport zu ermöglichen, aber zusätzliche Merkmale umfasst, die eine Isolierung auf einen gewünschten Grad ermöglichen und die Wasseraufnahme anpassen und ermöglichen, dass Wasser an einen des Weiteren Tank oder Tanks geleitet wird, der auf einer niedrigeren Höhe angebracht ist als die beiden verbundenen Tanks; auf jeder Höhe der Tanks befindet sich ein Kugelventil [18] oder ein Rückhaltemechanismus, der verhindert, dass Wasser überläuft, wenn der Tank oder die Tanks auf dieser Höhe ihre Kapazität zur Wasseraufnahme erreicht hat/haben; dadurch kann das System schichtweise gefüllt werden, wodurch eine Bewegung durch die Nutzung entsteht, wenn das Wasser von einer Ebene zur nächsten fließt, und dadurch eine Sauerstoffanreicherung erreicht wird, die es ermöglicht, das Wasser in großen Mengen an einem beliebigen Ort innerhalb eines Gebäudes zu speichern, um diese Methode zu erleichtern und die gewünschte Menge zu erhalten.

2. Die Regenwassernutzungsanlage aus Anspruch 1, wobei ein Futterrohr an neuen und in situ Wasserrinnen angebracht ist, sodass durch den Einbau dieses Futterrohrs Wasserrinnen nicht entfernt werden müssen; das Futterrohr kann aus einem beliebigen Material hergestellt sein kann, um eine maximale Effizienz zu erreichen und kann einfach an alle entsprechenden Maße in Längen von 2 Metern angepasst werden, wobei alle 4 Meter ein Schlammfang angebracht wird oder, in bestimmten Situationen, eine alternative Vorrichtung.

3. Die Regenwassernutzungsanlage nach einem der zuvor erwähnten Ansprüche, wobei die Speichertanks entweder gestützt werden durch eine Kanalhalterung unterhalb, die an einer Mauer oder einer Struktur angebracht ist, entweder mit Ankerbolzen oder einer alternativen Sicherungsbefestigung, oder am Dachstuhl befestigt ist, mit Befestigungen aus Materialien, die ausreichend stützen, um das Verhältnis von Gewicht und Volumen zu berücksichtigen und die visuelle Koordinierung zu ermöglichen.

4. Die Regenwassernutzungsanlage nach einem der zuvor erwähnten Ansprüche, wobei die Struktur des Gebäudes für die stapelbare Montage der Tanks genutzt wird; dabei besteht die Bauweise der Gebäude aus einer Reihe von Stahlpfosten, um das Dach und eine Mauer auf der Außenseite für eine Höhe zu stützen, die in den meisten Fällen Luftströmung berücksichtigt, um zu verhindern, dass Tiere aufgrund von Luftmangel erkranken; diese Mauer kann als Stütze für die Tanks genutzt werden, wobei die Hauptstützen im Gebäude genutzt werden, um die Speicherung zu erleichtern, indem Stützen von einer Senkrechten zur anderen angebracht werden, um als Regale für Tanks zu dienen, sodass dies die Struktur nicht schwächt und für benötigte Mengen flexibel ist; es kann auch ein Rahmen aus 2 Senkrechten mit horizontalen Regalböden angebracht werden, um das oben erwähnte Ergebnis zu erzielen.

5. Die Regenwassernutzungsanlage nach einem der zuvor erwähnten Ansprüche, wobei, wenn sich Schmutz an der ersten Zulaufleitung sammelt und das Wasser daran hindert, zu den Tanks zu gelangen, wird der Füllvorgang von der nächsten Zulaufleitung erledigt, sodass Schmutz direkt durch die Rinne geleitet wird und bei allgemeinen Wartungs- und Reinigungsarbeiten entfernt werden kann, wobei dieses System auch die Bildung von kleinen Strudeln ermöglicht, die die Sauerstoffanreicherung in Verbindung mit der Wasserbewegung durch das System unterstützen; diese Zulaufleitungen arbeiten auch in umgekehrter Richtung; der Vorteil daran, die Tanks im Vorsprung in diesem Umkreis zu platzieren ist, dass mögliche Probleme außerhalb des Gebäudes auftreten und daher kein Schaden an der Immobille entstehen kann.

6. Die Regenwassernutzungsanlage nach einem der zuvor erwähnten Ansprüche, wobei zusätzliche Tanks innerhalb eines Gebäudes/von Gebäuden platziert werden, sodass keine Notwendigkeit eines Vorsprungs zum besagten Gebäude/zu besagten Gebäuden besteht und die einfache Isolierung auf einen gewünschten Grad ermöglicht wird; in diesem Fall werden die Futterrohre verlängert.

7. Die Regenwassernutzungsanlage nach einem der zuvor erwähnten Ansprüche, wobei die Lage und Montage der Tanks im Umkreis erhöhten Schutz und Sicherheit für eine Immobilie bietet, unter anderem zum Feuerschutz, und aufgrund der Tatsache, dass es Wasser an jedem Ort gibt, der versorgt werden muss, besteht keine Notwendigkeit für große Mengen an Rohrleitungen, um das Wasser innerhalb oder außerhalb des Gebäudes für allgemeine Sanitäranlagen zu nutzen, die nicht das Format der oben genannten Regenwassernutzungsanlage betreffen.

8. Eine Regenwassernutzungsanlage nach einem der zuvor erwähnten Ansprüche, wobei Filter verwendet werden, um für das Wasser eine Qualität zu erzielen, die frei von Ablagerungen, Bakterien oder Chemikalien und somit zum Verzehr für Menschen geeignet ist, entweder aus einer festen Struktur oder beliebigen Materialien oder speziellen Konstruktionen, die als Reservoir für die Regenwassergewinnung genutzt werden, und die vorangehend erwähnte Montage der Tanks auf einem erhöhten, in einem vertieften oder verdeckten Bereich, entweder in einer Vorrichtung in der Immobilie oder Struktur oder in einer Vorrichtung um die Immobilie oder Struktur zum Einsatz in anderen industriellen Einrichtungen.

## Revendications

1. Un système de récupération d'eau de pluie comprenant un réservoir [7] conçu pour permettre l'ajout de réservoirs[7] d'une conception linéaire avec un moyen de connexion, les réservoirs[7] étant positionnables dans une partie d'un bâtiment appelée projection, **caractérisé en ce que** l'eau provenant du toit passe par un canal appelé gouttière [5] afin d'être canalisée vers des points de dispersion hors du bâtiment, au moyen d'un tuyau installé verticalement le long de la gouttière, appelé tuyau de descente, **caractérisé en ce que** l'eau de pluie, avant d'atteindre ledit tuyau de descente, est déviée vers les réservoirs [7] par des conduites [10] placées sur un élément vertical dans la gouttière [5], ledit élément vertical interne est vertical et parallèle au mur du bâtiment, lesdites conduites [10] connectent hermétiquement les réservoirs [7], lesdites conduites [10] étant de forme circulaire ou toute autre forme souhaitée et partant d'un niveau qui réduit le risque de débris entrant dans les réservoirs [7] avec un collecteur créé à des points précis, **caractérisé en ce que** les réservoirs [7] sont d'une conception permettant l'auto-nettoyage du système, le moyen de connexion étant un tuyau circulaire, **caractérisé en ce que** réservoirs sont placées au même niveau d'élévation et connectées par le tuyau circulaire, lequel est reçu par un point de connexion à la base des réservoirs [7] **caractérisé en ce que** le tuyau circulaire est conçu de telle façon que son fond soit à niveau avec la base des réservoirs, prévenant ainsi la formation de sédiments lorsque réservoirs consécutives sont connectées au même niveau, **caractérisé en ce que** la base des réservoirs n'a pas de rainures ou d'aspérités de sorte que le processus est continu à travers tout le système, **caractérisé en ce que** lesdites réservoirs [7] sont de forme conique permettant de les emboîter facilement pour les stocker et les transporter, mais comprennent également des caractéristiques permettant l'obtention du niveau d'isolation souhaité, et l'installation de la collecte d'eau, et où l'eau est canalisée dans une autres réservoirs[7] placée à un niveau d'élévation inférieur aux réservoirs connectées précédemment mentionnées, et où chaque niveau des réservoirs dispose d'une vanne à bille [18] ou d'un mécanisme de restriction qui empêchera le liquide de déborder lorsque la ou les réservoir[7] ou réservoirs [7] à ce niveau auront atteint leur capacité maximale d'eau, ce qui permet au système de se remplir par accumulation, permettant le mouvement de l'eau tandis qu'elle coule d'un niveau à un autre, obtenant ainsi l'oxygénation qui permet de stocker l'eau en gros volumes à tout emplacement d'un bâtiment qui facilitera cette méthode, et permettra d'obtenir la quantité souhaitée.

2. Le système de récupération d'eau de pluie selon la revendication 1, dans lequel une protection est posée sur les nouvelles gouttières et celles in situ, de sorte qu'avec la pose de cette protection, il n'est pas nécessaire de retirer les gouttières, **caractérisé en ce que** la protection est faite de tout matériau nécessaire afin d'assurer une efficacité maximale et peut être facilement posée en longueurs de 2m, offrant ainsi un collecteur tous les 4m, ou toute autre spécification dans certaines situations.

3. Le système de récupération d'eau de pluie selon l'une quelconque des revendications précédentes, où les réservoirs de stockage sont soutenues soit par un support de fixation placé sous les réservoirs lequel est fixé à un mur ou une structure par des chevilles ou tout autre dispositif de fixation, ou suspendues aux fermes de toit avec des fixations dont des matériaux offrent un support adéquat permettant de prendre en compte le rapport poids/volume et réaliser une coordination visuelle.

4. Le système de récupération d'eau de pluie selon l'une quelconque des revendications précédentes où la structure du bâtiment est utilisée pour monter les réservoirs en les empilant, où le modèle des bâtiments comprend un nombre de montants en acier soutenant le toit et un mur à l'extérieur d'une hauteur prenant en compte le débit d'air nécessaire dans la plupart des cas pour éviter que le bétail ne tombe malade par manque d'air, ce mur peut être utilisé pour soutenir les réservoirs, **caractérisé en ce que** les supports principaux dans le bâtiment sont utilisés pour faciliter le format de stockage en créant des supports allant d'un montant à un autre faisant office d'étagères pour les réservoirs de sorte que la structure ne soit pas affaiblie et soit flexible pour les volumes requis, et une armature peut également être créée à partir de 2 montants avec des étagères horizontales créant ainsi l'effet mentionné ci-dessus.

5. Le système de récupération d'eau de pluie selon l'une quelconque des revendications précédentes **caractérisé en ce que** lorsque des débris sont logés au niveau de la première conduite empêchant ainsi l'eau de passer par les réservoirs, le remplissage est pris en charge par la conduite suivante, laissant ainsi les débris passer dans la gouttière pour être retirés lors de l'entretien général et du nettoyage, **caractérisé en ce que** le système permet également que de petits remous contribuent à l'oxygénation en conjonction avec le mouvement de l'eau à travers le système, **caractérisé en ce que** ces conduites fonctionnent également en sens inverse, l'avantage des réservoirs se trouvant dans la projection de la circonférence étant que tout problème qui pourrait survenir aurait lieu à l'extérieur du bâtiment et ne causerait donc aucun dommage à la propriété.

6. Le système de récupération d'eau de pluie selon l'une quelconque des revendications précédentes où des réservoirs supplémentaires se trouvent à l'intérieur d'un ou des bâtiments, réduisant ainsi le besoin de créer une projection au dit bâtiment et permettant de réaliser facilement une isolation au niveau souhaité, la longueur des conduites étant augmentée dans ce cas.

7. Le système de récupération d'eau de pluie selon l'une quelconque des revendications précédentes où l'emplacement et l'installation des réservoirs dans la circonférence offre de grandes protections et garanties à une propriété, contre un incendie pour ne nommer qu'un risque, et dû au fait que l'eau est présente à tout emplacement desservi par le système, **caractérisé en ce qu'**il n'est donc pas nécessaire d'avoir de gros volumes de canalisation pour approvisionner en eau l'intérieur ou l'extérieur du bâtiment pour des installations de plomberie générale en dehors du format du système de récupération d'eau de pluie précédemment cité.

8. Un système de récupération d'eau de pluie selon l'une quelconque des revendications précédentes où des filtres sont utilisés pour que l'eau soit d'une qualité sans sédiments et bactéries ou produits chimiques, la rendant propre à la consommation humaine, soit depuis une structure fixe ou à partir de matériaux ou mécanismes spécifiques qui joueront le rôle de réservoir pour récupérer l'eau de pluie, et le modèle de cuve précédemment cité installé sur une zone élevée, en contrebas ou cachée, sur place ou à proximité d'une propriété ou d'une structure pour utilisation dans d'autres applications industrielles.
